# FASCICULE DE BREVET EUROPEEN

(11) **EP 0 867 258 B1**
(45) Date de publication et mention de la délivrance du brevet: **18.12.2002**
(21) Numéro de dépôt: 98400654.4
(22) Date de dépôt: 20.03.1998
(51) Int. Cl.: B23P 19/08, B65G 59/06, B23P 19/00

(54) **Dispositif pour équiper une tête de piston de moteur thermique d'un jeu de segments**
Vorrichtung zum Montieren einer Gruppe von Ringen auf einem Kolbenkopf einer Brennkraftmaschine
Device for fitting an assembly of rings on a piston head of a combustion engine

(30) Priorité: 24.03.1997 FR 9703550; 20.06.1997 FR 9707700
(43) Date de publication de la demande: 30.09.1998
(73) Titulaire: Renault Automation Comau, 92365 Meudon La Forêt Cedex (FR)
(72) Inventeur: Grare, Pierre, 91420 Morangis (FR); Thurier, Yvan, 94320 Thiais (FR); Laigre, Claude, 77950 Rubelles (FR)
(74) Mandataire: Robert, Jean-Pierre

(56) Documents cités:
- EP-A- 0 457 627
- EP-A- 0 526 329
- FR-A- 2 688 156
- SU-A- 177 356
- US-A- 2 792 625
- US-A- 3 180 523
- PATENT ABSTRACTS OF JAPAN vol. 095, no. 008, 29 septembre 1995 -& JP 07 136867 A (SHINMEI KOGYO KK), 30 mai 1995,
- PATENT ABSTRACTS OF JAPAN vol. 014, no. 262 (M-0981), 6 juin 1990 -& JP 02 075745 A (ISUZU MOTORS LTD), 15 mars 1990,

## Description

La présente invention concerne un dispositif de montage d'un jeu de segments sur une tête de piston de moteur thermique.

On connaît par le document JP-A-07136867 un dispositif pour équiper une tête de piston de moteur thermique d'un jeu de segments comportant un puits de segmentation définissant un espace cylindrique de réception de la tête de piston dans lequel débouchent des gorges périphériques étagées suivant l'axe de l'espace, chacune de ces gorges étant destinée à recevoir un segment du jeu de segments, des moyens de dilatation radiale des segments logés de manière amovible dans le puits et des moyens d'amenée des segments dans les gorges étagées, ces moyens d'amenée comportant un dispositif formé par des couloirs parallèles superposés débouchant dans les gorges du puits et par un poussoir monté à coulissement dans chacun des couloirs, chaque couloir possédant une ouverture latérale d'alimentation qui le relie à un couloir adducteur dans lequel repose le pied d'une pile de segments, ce couloir adducteur possédant un poussoir coulissant déplaçable depuis une position où il est situé au-delà du pied de la pile par rapport à l'ouverture latérale jusqu'à une position où il est situé à proximité de cette ouverture.

La présente invention se propose d'apporter une simplification à ce type de dispositifs en ce qui concerne notamment les moyens d'amenée du jeu de segments en regard des gorges de la tête du piston à équiper.

A cet effet, l'invention a pour objet un dispositif tel que décrit dans le document JP-A-07 136 867 remarquable par les moyens contenus dans la partie caractérisante de la revendication 1.

D'autres caractéristiques et avantages ressortiront de la description donnée ci-après à titre d'exemple d'un mode de réalisation de l'invention.

Il sera fait référence aux dessins annexés parmi lesquels :

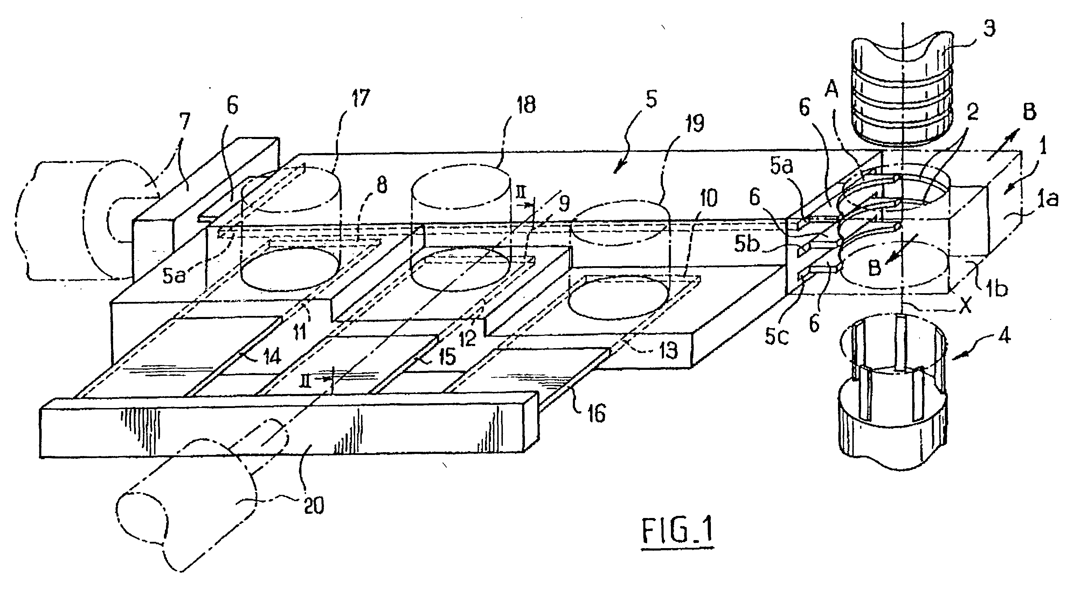

- la figure 1 est un schéma en perspective simplifié du dispositif selon l'invention ;
- la figure 2 est une coupe schématique de la figure 1 suivant la ligne II-II illustrant un accessoire de réalisation adapté aux segments racleurs d'huile de faible épaisseur.

Un espace cylindrique A d'axe X forme, dans un bâti 1 un puits de segmentation pour recevoir dans des gorges 2 les segments, un piston 3 à équiper et des doigts d'expansion 4 destinés, de manière connue, à élargir (dilater radialement) les segments avant la pénétration du piston 3 dans le puits. Les gorges 2 ouvertes sur l'espace A.

Les segments proviennent d'un dispositif d'amenée ou convoyeur 5 qui comprend essentiellement autant de couloirs (5a, 5b, 5c) parallèles et superposés que de segments à installer. Le convoyeur 5 est réalisé de manière simple par un empilement de plaques et d'entretoises assemblé au moyen de vis non représentées. Entre les plaques, les entretoises définissent les dimensions de la section du couloir qui sont adaptées à celles du segment qu'il reçoit. Chaque couloir comporte un poussoir 6 coulissant et chaque poussoir 6 est attelé à un actionneur unique 7 qui assure leur coulissement simultané dans chaque tiroir entre une position d'attente située à gauche de la figure et la position représentée où les poussoirs 6 sont situés au voisinage du puits A.

Chaque couloir possède un accès latéral 8, 9, 10, auquel aboutit un couloir adducteur 11, 12, 13 perpendiculaire au couloir principal, chacun pourvu d'un poussoir secondaire 14, 15 et 16. Les accès latéraux 8, 9, 10 sont ménagés dans les entretoises correspondantes du convoyeur 5 d'un même côté de ce convoyeur de sorte que les couloirs adducteurs sont également situés d'un seul côté de ce convoyeur. Chacun de ces couloirs adducteurs est constitué de la même manière que ceux du convoyeur 5, c'est-à-dire par un jeu de plaques et d'entretoises superposées et s'étend jusqu'au couloir principal correspondant à partir d'un magasin 17, 18, 19 de segments dans lesquels les segments sont empilés. Chaque poussoir est d'une épaisseur sensiblement égale à l'épaisseur du segment correspondant si bien que lorsqu'il s'éloigne de l'accès au couloir principal correspondant, il découvre une ouverture ménagée dans la paroi supérieure du couloir adducteur correspondant par laquelle un segment peut tomber dans le couloir. En approchant ensuite chaque poussoir adducteur de l'accès, on pousse le segment dans le couloir principal tout en maintenant la pile de segment sous laquelle glisse le poussoir. L'ensemble des poussoirs adducteurs est relié à un organe de manoeuvre unique 20, ce qui est possible du fait de la disposition des couloirs adducteurs s'étendant d'un seul côté du convoyeur.

L'amenée d'un jeu de segments au puits de segmentation s'opère de la manière suivante.

Les poussoirs principaux 6 sont déplacés vers la gauche de la figure découvrant les accès 8 à 10. Les poussoirs 14 à 16 sont tirés au-delà des piles 17 à 19. Chaque couloir adducteur est donc chargé d'un segment. Au moyen d'un actionneur unique 20, chaque poussoir 14 à 16 est déplacé en direction du convoyeur 5 pour loger le segment correspondant dans le couloir principal 5a, 5b, 5c, correspondant. Les poussoirs 14 à 16 sont ensuite dégagés et les poussoirs 6 déplacés vers le puits 1 avec l'actionneur unique 7. Chaque segment est alors pris en charge par le poussoir 6 correspondant au moment où celui-ci parvient au niveau de l'accès latéral correspondant. Du fait de l'alignement vertical des poussoirs 6, l'ensemble des segments parvient centré au niveau du puits 1. Les poussoirs du convoyeur ou des couloirs adducteurs peuvent être conformés en arc de cercle à leur extrémité au contact des segments.

Dans ce puits, les segments sont installés dans les gorges 2 appropriées qui conservent leur position relative et permettent l'action des doigts d'expansion 4 et la pénétration du piston. On notera que le puits A est réalisé dans un bâti 1 en au moins deux parties ouvrantes la et 1b (par exemple en s'écartant selon les flèches B) pour libérer les segments montés sur le piston des gorges 2 et ainsi permettre l'extraction du piston équipé de ses segments.

L'un des intérêts de l'invention réside dans la diminution du nombre des actionneurs mis en oeuvre et la rationalisation de l'architecture d'un dispositif de segmentation d'une tête de piston.

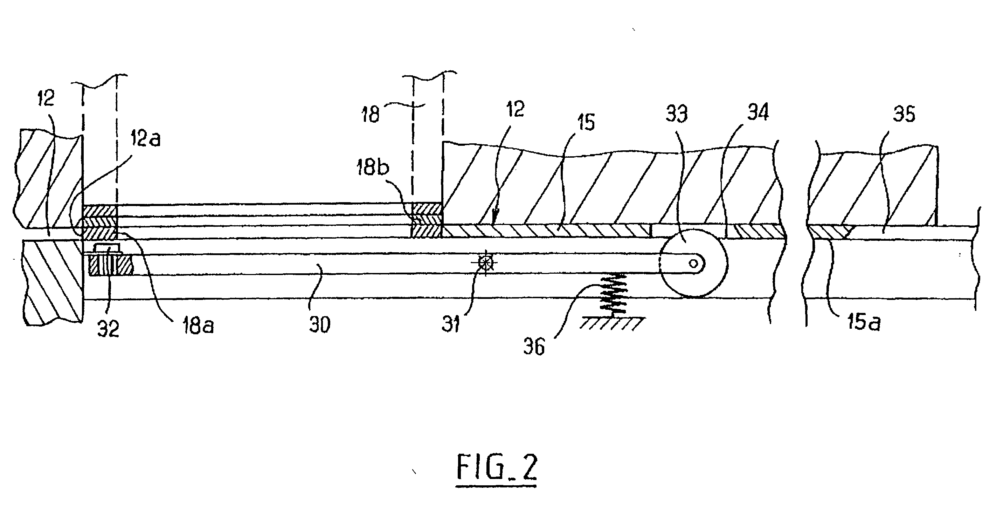

A la figure 2 on a représenté par une vue en coupe le couloir 12 concernant la pile de segments 18 dont on supposera qu'ils sont des segments de faible épaisseur constituant ce qu'il est convenu dans le domaine d'appeler des rails pour segments racleurs d'huile en trois parties.

Ces segments étant de faible épaisseur présentent l'inconvénient suivant : lorsque le pousseur 15 entraîne dans le couloir 12 le segment inférieur 18a, le segment 18b qui le surmonte a tendance à fléchir devant la lumière 12a d'intersection du couloir 12 avec le logement du pied de pile 18 car il n'est plus soutenu par le segment inférieur. Il a donc tendance à s'engager dans le couloir et former un coin dans la lumière 12a qui bloque la poursuite du glissement du segment 18a. Pour empêcher ce phénomène, on équipe le dispositif d'un levier 30, articulé par son milieu au bâti du dispositif autour d'un axe 31 transversal au couloir 12 dans lequel coulisse le poussoir 15, en-dessous de celui-ci.

A l'une de ses extrémités, le levier 3C possède un doigt 32 qui se trouve juste en avant de l'entrée 12a du couloir 12, sous la partie la plus en avant de chaque segment de la pile 18 tandis que son autre extrémité est pourvue d'un galet 33 qui est forcé au contact de la face inférieure 15a du poussoir 15. Ce dernier possède deux logements 34 et 35 (ou orifices) dans lesquels le galet 33 peut "tomber" sous l'effet du ressort 36 qui l'appuie contre la face inférieure 15a du poussoir 15. Le niveau de la face inférieure du poussoir 15 est tel que le doigt 32 fait saillie dans le couloir 12 d'une hauteur égale à l'épaisseur du segment lorsque le galet 33 est au contact du poussoir 15. Lorsque le galet pénètre dans l'un des logements 34 ou 35 le doigt 32 est escamoté sous la surface inférieure du couloir 12.

Lorsque le poussoir 15 est dans sa position en attente (comme représenté à la figure 2) le galet 33 est dans le logement 34. Le doigt 32 est ainsi sous le niveau du couloir 12. Le poussoir est animé d'un mouvement vers la gauche de la figure. Le segment 18a pénètre dans le couloir 12. Le logement 34 s'éclipse par rapport au galet 33 qui est repoussé vers le bas par l'épaisseur du poussoir 15. Le doigt 32 est donc élevé pour porter contre la surface inférieure de la partie avant du segment 18b de la pile 18. Au moment où l'arrière du segment 18a arrive devant l'ouverture 12a, le logement 35 parvient au niveau du galet 33 qui y pénètre, le doigt 32 étant alors tiré vers le bas et autorise la poursuite du glissement du segment 18a et du poussoir 15 dans le couloir 12.

Le logement 35 est de longueur suffisante pour que le poussoir 15 puisse effectuer toute la course nécessaire à placer le segment 18a dans le couloir 5b. La longueur de la partie du poussoir 15 sur la surface 15a de laquelle porte le galet 33 est au plus égale au diamètre intérieur de chaque segment de la pile 18.

Lors de la course de retour du poussoir 15, les mouvements du levier sont inversés si bien que le segment 18b atteint sa position d'attente lorsque le galet 33 se loge dans l'ouverture 34 du poussoir.

## Revendications

1. Dispositif pour équiper une tête de piston (3) de moteur thermique d'un jeu de segments comportant un puits de segmentation définissant un espace cylindrique (A) de réception de la tête de piston (3) dans lequel débouchent des gorges (2) périphériques étagées suivant l'axe (X) de l'espace, chacune de ces gorges (2) étant destinée à recevoir un segment du jeu de segments, des moyens (4) de dilatation radiale des segments logés de manière amovible dans le puits (1) et des moyens d'amenée des segments dans les gorges étagées, ces moyens d'amenée comportant un dispositif (5) formé par des couloirs (5a, 5b, 5c) parallèles et superposés débouchant dans les gorges (2) du puits et par un poussoir (6) monté à coulissement dans chacun de ces couloirs, chaque couloir possédant une ouverture latérale d'alimentation (8, 9, 10) qui le relie à un couloir adducteur (11, 12, 13) dans lequel repose le pied d'une pile (17, 18, 19) de segments, ce couloir adducteur possédant un poussoir coulissant (14, 15, 16) déplaçable depuis une position où il est situé au-delà du pied de la pile par rapport à l'ouverture latérale jusqu'à une position où il est situé à proximité de cette ouverture latérale, **caractérisé en ce que** l'ensemble des couloirs adducteurs (11, 12, 13) est situé d'un seul côté des couloirs superposés (5a, 5b, 5c) et **en ce que** les poussoirs (14, 15, 16) de chaque couloir adducteur sont réunis respectivement à un seul moyen d'actionnement (7, 20).

2. Dispositif selon la revendication 1, **caractérisé en ce que** les couloirs ont une épaisseur sensiblement égale à celle du segment correspondant et une largeur sensiblement égale au diamètre extérieur de celui-ci.

3. Dispositif selon l'une des revendications précédentes,- **caractérisé en ce que** l'extrémité de chaque poussoir en contact avec le segment correspondant est en arc de cercle de rayon au plus égal au rayon extérieur du segment.

4. Dispositif selon l'une des revendications précédentes, **caractérisé en ce que** le puits (A) de segmentation est réalisé dans un bâti (1) en au moins deux parties (1a, 1b) séparables l'une de l'autre.

5. Dispositif selon l'une des revendications précédentes, **caractérisé en ce qu'**au moins un couloir adducteur (12) est équipé d'un doigt inférieur (32) au niveau de la partie avant du pied de la pile (18) de segments correspondante, mobile entre une première position où il est escamoté sous le couloir adducteur (12) et une seconde position où il fait saillie dans le couloir (12) d'une hauteur sensiblement égale à l'épaisseur d'un segment, le doigt (32) étant maintenu dans sa seconde position à l'intérieur d'un segment lors du déplacement de ce segment dans le couloir (12) sous l'action du poussoir (15).

6. Dispositif selon la revendication 5, **caractérisé en ce que** le doigt (32) est porté par une extrémité d'un levier (30) stationnaire articulé sous le couloir (12), l'autre extrémité de ce levier coopérant avec une surface de came (34, 35, 15a) portée par le poussoir (15).

## Patentansprüche

1. Vorrichtung zum Versehen eines Kolbenkopfes (3) einer Wärmekraftmaschine mit einem Satz von Kolbenringen, umfassend eine Bohrung zur Kolbenringbestückung, wobei die Bohrung einen zylindrischen Raum (A) zur Aufnahme des Kolbenkopfes (3) begrenzt, wobei in den Raum Umfangsnuten (2) münden, die entlang der Achse (X) des Raumes gestuft angeordnet sind, wobei jede dieser Nuten (2) dazu bestimmt ist, einen Kolbenring des Satzes von Kolbenringen aufzunehmen, herausnehmbar in der Bohrung (1) angeordnete Mittel (4) zur radialen Dehnung der Kolbenringe und Mittel zum Zuführen der Kolbenringe in die gestuft angeordneten Nuten, wobei diese Mittel zum Zuführen eine Vorrichtung (5) umfassen, die aus parallelen und übereinander angeordneten Förderbahnen (5a, 5b, 5c) gebildet ist, die in die Nuten (2) der Bohrung münden, sowie aus einem Stößel (6), der in jeder dieser Förderbahnen verschiebbar gelagert ist, wobei jede Förderbahn eine seitliche Zuführungsöffnung (8, 9, 10) hat, welche die Förderbahn mit einer Zuführungsbahn (11, 12, 13) verbindet, in der der Fuß eines Stapels (17, 18, 19) aus Kolbenringen ruht, wobei diese Zuführungsbahn einen Gleitstößel (14, 15, 16) besitzt, der von einer Position, in der er sich im Verhältnis zur seitlichen Öffnung jenseits des Fußes des Stapels befindet, bis in eine Position verschoben werden kann, in der er sich nahe dieser seitlichen Öffnung befindet, **dadurch gekennzeichnet, daß** sich die Gesamtheit der Zuführungsbahnen (11, 12, 13) auf einer einzigen Seite der übereinander angeordneten Förderbahnen (5a, 5b, 5c) befindet und daß die Stößel (14, 15, 16) jeder Zuführungsbahn jeweils mit einem einzigen Betätigungsmittel (7, 20) verbunden sind.

2. Vorrichtung nach Anspruch 1, **dadurch gekennzeichnet, daß** die Förderbahnen eine Dicke haben, die im wesentlichen gleich der des entsprechenden Kolbenringes ist, sowie eine Breite, die im wesentlichem gleich dem Außendurchmesser desselben ist.

3. Vorrichtung nach einem der vorhergehenden Ansprüche, **dadurch gekennzeichnet, daß** das Ende jedes Stößels, das mit dem entsprechenden Kolbenring in Kontakt ist, die Form eines Kreisbogens mit einem Radius hat, der höchstens gleich dem Außenradius des Kolbenrings ist.

4. Vorrichtung nach einem der vorhergehenden Ansprüche, **dadurch gekennzeichnet, daß** die Bohrung (A) zur Kolbenringbestückung in einem Gestell (1) aus mindestens zwei Teilen (1a, 1b) ausgebildet ist, die voneinander gelöst werden können.

5. Vorrichtung nach einem der vorhergehenden Ansprüche, **dadurch gekennzeichnet, daß** mindestens eine Zuführungsbahn (12) im Bereich des vorderen Teils des Fußes des entsprechenden Stapels (18) aus Kolbenringen mit einem unteren Zapfen (32) versehen ist, der zwischen einer ersten Position, in der er unter der Zuführungsbahn (12) versenkt ist, und einer zweiten Position beweglich ist, in der er in die Bahn (12) mit einer Höhe hineinragt, die im wesentlichen gleich der Dicke eines Kolbenringes ist, wobei der Zapfen (32) während der Verschiebung des Kolbenringes in der Bahn (12) unter der Wirkung des Stößels (15) in seiner zweiten Position im Inneren dieses Kolbenringes gehalten wird.

6. Vorrichtung nach Anspruch 5, **dadurch gekennzeichnet, daß** der Zapfen (32) von einem Ende eines ortsfesten Hebels (30) getragen wird, der unter der Bahn (12) angelenkt ist, wobei das andere Ende dieses Hebels mit einer Nockenfläche (34, 35, 15a) zusammenwirkt, die von dem Stößel (15) getragen wird.

## Claims

1. A device for fitting a set of piston rings to a piston head (3) of an engine, the device comprising a segmentation well defining a cylindrical space (A) for receiving the piston head (3) and into which there open out peripheral grooves (2) that are staged along the axis (X) of the space, each of the grooves (2) being designed to receive a piston ring of the set of piston rings, means (4) for radially expanding piston rings removably received in the well (1), and feed means for feeding piston rings into the staged grooves, said feed means comprising a device (5) made up of superposed parallel passages (5a, 5b, 5c) opening out into the grooves (2) of the well and of a pusher (6) slidably mounted in each of the passages, each passage possessing a lateral feed opening (8, 9, 10) connecting it to a supply passage (11, 12, 13) having the bottom of a stack (17, 18, 19) of piston rings resting therein, said supply passage possessing a sliding pusher (14, 15, 16) movable from a position in which it is situated beyond the bottom of the stack away from the lateral opening, to a position in which it is situated close to said lateral opening, the device being **characterized in that** the set of supply passages (11, 12, 13) is situated on one side only of the superposed passages (5a, 5b, 5c), and **in that** the pushers (14, 15, 16) in the respective supply passages are united with a single actuator means (7, 20).

2. A device according to claim 1, **characterized in that** the passages are of a thickness substantially equal to the thickness of the corresponding piston ring and of a width substantially equal to the outside diameter thereof.

3. A device according to any preceding claim, **characterized in that** the end of each pusher in contact with the corresponding piston ring is a circular arc of radius no greater than the outside radius of the piston ring.

4. A device according to any preceding claim, **characterized in that** the piston ring well (A) is formed in a structure (1) in the form of at least two mutually separable portions (1a, 1b).

5. A device according to any preceding claim, **characterized in that** at least one supply passage (12) is fitted with a bottom finger (32) level with the leading portion of the bottom of the corresponding stack (18) of piston rings, the finger being movable between a first position in which it is retracted beneath the supply passage (12) and a second position in which it projects into the passage (12) by a height that is substantially equal to the thickness of a piston ring, the finger (32) being held in its second position inside a piston ring while said piston ring is being moved along the passage (12) under drive from the pusher (15).

6. A device according to claim 5, **characterized in that** the finger (32) is carried by one end of a stationary lever (30) hinged beneath the passage (12), the other end of said lever co-operating with a camming surface (34, 35, 15a) carried by the pusher (15).
